# EUROPEAN PATENT APPLICATION

(11) **EP 4 597 474 A1**
(43) Date of publication of application: **06.08.2025**
(21) Application number: 23932123.5
(22) Date of filing: 21.07.2023
(51) Int. Cl.: G08G 1/16, B60W 40/04, B60W 50/00, B60W 60/00

(54) **MOVING-BODY MOVEMENT AUTOMATION DEVICE AND STORAGE MEDIUM STORING MOVEMENT AUTOMATION PROGRAM**

(30) Priority: 03.04.2023 JP 2023060263
(71) Applicant: Any Co., Ltd., Hiratsuka-shi Kanagawa 254-0052 (JP)
(72) Inventor: FUKAWA Yasuro, Hiratsuka-shi, Kanagawa 254-0052 (JP)
(74) Representative: Grättinger Möhring von Poschinger Patentanwälte Partnerschaft mbB
(86) International application number: PCT/JP2023/026802
(87) International publication number: WO 2024/209713

(57) **Abstract**

A mobile automation device for a moving body that controls the moving body so that the moving body moves autonomously, the device comprising: an input unit that acquires information on the moving body or a surrounding environment of the moving body; a prediction unit that generates first predicted motion data related to a future moving mode of the moving body based on the information acquired via the input unit; a communication control unit that performs processing related to communication with an additional mobile automation device mounted on an additional moving body other than the moving body and receives second predicted motion data related to a future moving mode of the additional moving body via the input unit from the additional mobile automation device; and a priority determination unit that determines a motion priority order of the moving body and the additional moving body based on the first predicted motion data and the second predicted motion data, thereby controlling a motion of more than one moving body based on a determination result of the priority determination unit.

## Description

### TECHNICAL FIELD

The present invention relates to a mobile automation device for a moving body and a storage medium storing a mobile automation program. The present invention further relates to a safety assurance device that cooperates with the mobile automation device.

### BACKGROUND

Taking cars as an example of a moving body, an autonomous driving system for car driving has been developed. A system in which autonomous driving systems assist the driver in driving the car has already been put to practical use. Furthermore, beyond simple assistance to the driver, the technology in which autonomous driving systems independently determine how the car should drive and move the car to a desired location according to a result of this determination so as to actively control the car is gradually being put to practical use.

In order to effectively execute such an autonomous driving system, it is necessary to acquire driving-related information on the driving mode of the car and the driving environment around the present car. Various detection devices may be used to collect driving-related information, and video cameras are particularly commonly used as detection devices because they can acquire a lot of real-time information on the driving environment. The information acquired from the detection device is stored in an integrated circuit (IC) mounted on the car. The autonomous driving system determines the appropriate driving mode of the car from the history information stored in the IC and the real-time driving-related information continuously acquired from the detection device, and provides assistance to the driver or appropriate control to the car based on a result of this determination.

As an example of such an autonomous driving system, particularly for preventing collisions between cars, the technology disclosed in the following Patent Document 1 is provided. Also, as an example of acquiring information on the driving environment using a video camera, the technology disclosed in the following Patent Document 2 is provided.

### Prior Art Documents

### Patent Documents

Patent Document 1: Japanese Patent Laid-open No. 2012-123000
Patent Document 2: Japanese Patent Laid-open No. 2012-198207

### SUMMARY

Problems to be solved by the present Invention

However, in an existing autonomous driving system that acquires information on the surrounding environment of a traveling vehicle substantially only by video cameras, only fragmentary information on the surrounding environment of the current traveling vehicle can be acquired. Therefore, there are cases where the autonomous driving system cannot appropriately control the vehicle according to the surrounding environment of the vehicle.

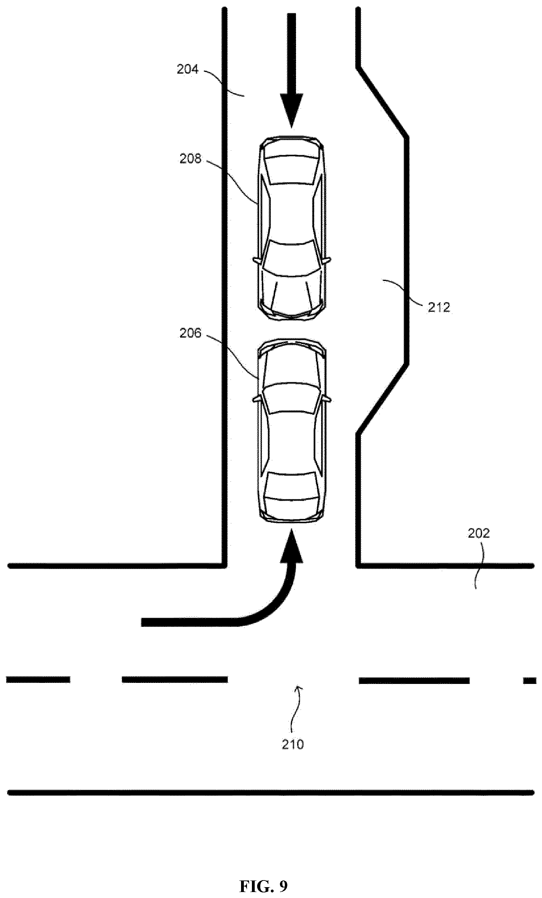

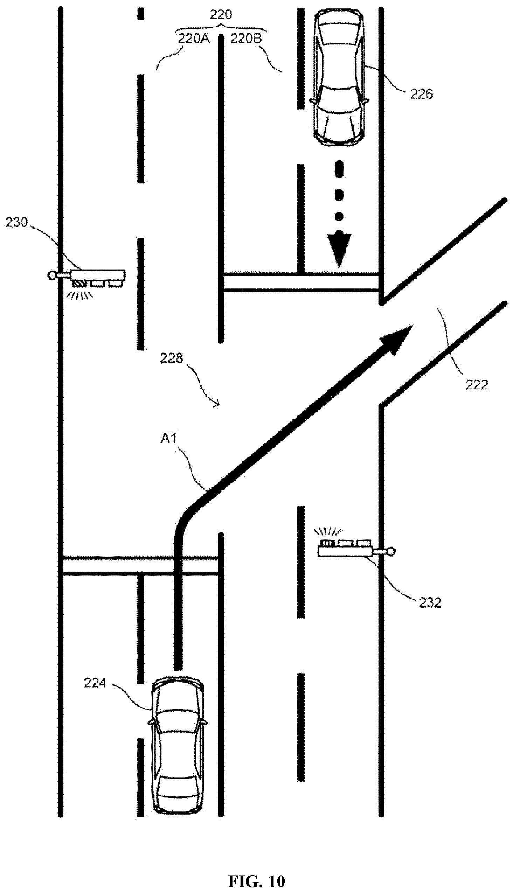

In the following, with reference to FIG. 9 or FIG. 10, examples of adverse situations that may arise when an existing autonomous driving system can only acquire fragmentary information on the surrounding environment of the vehicle are given.

It is assumed that a car 206 and another car 208, both equipped with existing autonomous driving systems, are traveling near a T-shaped road consisting of a main road 202 with two lanes on two sides (one lane on each side), and a side road 204 with a narrower road width than the main road 202 and, for example, a single lane in total. It is assumed that the car 206 is traveling autonomously on the main road 202 from left to right in the figure, and plans to turn left to the side road 204 after reaching the T-shaped junction 210. On the other hand, it is assumed that the car 208 is traveling autonomously on the side road 204 toward the T-shaped junction 210. Besides, it is assumed that an avoidance location 212 is provided on the side road 204, which may be used when vehicles pass each other.

In an existing autonomous driving system that acquires information on the surrounding environment at this time only using an on-board video camera, the system cannot make a driving plan based on the presence of other vehicles until the presence of other vehicles is recognized by the video camera. Therefore, as shown in FIG. 9, if the car 206 turns left from the T-shaped junction 210 toward the side road 204 before the car 208 reaches the T-shaped junction 210, the car 206 and the car 208 will recognize the presence of other cars using respective on-board video cameras for the first time after the car 206 enters the side road 204.

At this time, if the car 208 traveling on the side road 204 has already passed through the avoidance location 212, the cars 206 and 208 will be stuck while facing each other on the side road 204. Even if the cars 206 and 208 are prevented from colliding with each other by the collision prevention device for a moving body of Patent Document 1 or other autonomous driving system mounted on each of the cars, the autonomous driving system of each of the cars 206 and 208 will not be able to properly control the present car because it is unclear what action the other car will take next. For example, the cars 206 and 208 will stop while facing each other and will be temporarily unable to move.

In another example shown in FIG. 10, it is assumed that an adverse situation may occur when a car 224 and another car 226, both equipped with existing autonomous driving systems, are traveling near a forked road consisting of a straight road 220 with four lanes on two sides (two lanes on each side), and a branch road 222 that intersects with the straight road 220 at an angle that forms a so-called Y-shaped junction. It is assumed that the car 224 is traveling autonomously on one lane 220A of the straight road 220 and is planning to cross the opposite lane 220B of the straight road 220 from the Y-shaped junction 228 and enter the branch road 222 (see the arrow A1). On the other hand, it is assumed that the car 226 is traveling autonomously on the opposite lane 220B of the straight road 220 toward the Y-shaped junction 228.

Besides, in order to ensure the safe passage of cars and pedestrians near the Y-shaped junction 228, colored traffic signal machines 230 and 232 are installed near the Y-shaped junction 228. The traffic signal machine 230 is a device that emits light to indicate driving permission or a stop indication to cars, such as the car 224, traveling on the lane 220A. On the other hand, the traffic signal machine 232 is a device that emits light to indicate driving permission or a stop indication to cars, such as the car 226, traveling on the opposite lane 220B.

In this example, the traffic signal machine 230 indicates driving permission to the car 224 traveling on the lane 220A, while the traffic signal machine 232 indicates a stop indication to the car 226 traveling on the lane 220B. In this case, if the traveling car 224 continues traveling and reaches the Y-shaped junction 228, the car 224 needs to cross the opposite lane 220B at an appropriate timing in consideration of the situation of the opposite lane 220B and attempts to change its route toward the branch road 222. On the other hand, the traveling car 226 begins to move slowly in accordance with the indication issued by the traffic signal machine 232 in order to stop in front of the Y-shaped junction 228.

The surrounding environment information that the autonomous driving system of the car 224 can acquire is limited to information acquired through video cameras mounted on the car 224. This information would be sufficient if the indication from the traffic signal machine 232 is transmitted to vehicles, such as the car 226, traveling on the lane 220B. Therefore, if the traffic signal machine 232 is a colored light type signal machine with a general structure, only the back side of the traffic signal machine 232 can be recognized by the on-board video camera of the car 224 traveling on the lane 220A, and the specific display content of light color from the traffic signal machine 232 cannot be recognized by the car 224.

Therefore, the autonomous driving system and the passenger of the car 224 are likely to infer, based on the information acquired from the traffic signal machine 230, that the traffic signal machine 232, like the traffic signal machine 230, is also emitting a light indicating driving permission to the car 226. In other words, the autonomous driving system and the passenger of the car 224 will determine that the car 226 traveling on the opposite lane 220B will continue traveling and pass through the Y-shaped junction 228.

However, since the traffic light machine 232 actually shows a stop command, the car 226 begins to decelerate in preparation for stopping in front of the Y-shaped junction 228. Nonetheless, for the car 224 which cannot recognize the light color indication emitted by the traffic light machine 232, it is very difficult to understand the intention of the car 226, even if whether the car 226 is decelerating or not, such as the slowing down of the car 226, can be recognized. For example, the autonomous driving system and the passenger of the car 224 may infer that the car 226 is moving slowly in order to stop in front of the Y-shaped junction 228, or that the car 226 is moving slowly simply to guard against sudden appearance of pedestrians or bicycles near the Y-shaped junction 228. Therefore, the car 224 cannot confidently determine whether the car 226 will stop in front of the Y-shaped junction 228, and the car 224 stops in front of the Y-shaped junction 228 temporarily to wait for the car 226 to pass through the Y-shaped junction 228.

However, since the car 226 actually follows the indication of the traffic signal machine 232 and stops in front of the Y-shaped junction 228, the car 224 could continue to cross the lane 220B and enter the branch road 222. Only after the car 226 has stopped in front of the Y-shaped junction 228 does the car 224 understand that the traffic signal machine 232 is sending a stop indication, and the car 224 resumes moving toward the branch road 222.

At this time, if another vehicle is traveling behind the car 224, the following vehicle has to stop when the car 224 stops, disrupting the smooth traffic flow around the Y-shaped junction 228. Furthermore, the passengers of the car 224 or the car 226 may become impatient due to a discrepancy between the situation they infer or understand and the actual driving state of the other vehicle.

As described above, existing autonomous driving systems had to control the driving of cars only based on the current surrounding environment acquired as image information by a video camera and the stored history environment data, i.e., based on fragmentary information.

In view of the above problems, the present invention has an object to provide a mobile automation device for a moving body and a storage medium storing a mobile automation program that contribute to more appropriate and smooth autonomous motion of the moving body.

### Technical Solutions for Solving Problems

In order to solve the above-mentioned problems, the present invention provides a mobile automation device for a moving body that controls the moving body so that the moving body moves autonomously, the device is configured to include: an input unit that acquires information on the moving body or a surrounding environment of the moving body; a prediction unit that generates first predicted motion data related to a future moving mode of the moving body based on the information acquired via the input unit; a communication control unit that performs processing related to communication with an additional mobile automation device mounted on an additional moving body and receives second predicted motion data related to a future moving mode of the additional moving body via the input unit from the additional mobile automation device; and a priority determination unit that determines a motion priority order of the moving body and the additional moving body based on the first predicted motion data and the second predicted motion data, wherein motions of more than one moving body are controlled based on a determination result of the priority determination unit.

Furthermore, in order to solve the above-mentioned problems, the present invention stores in a storage medium a mobile automation program that enables a computer to function as a mobile automation device for a moving body that controls the moving body so that the moving body moves autonomously, wherein the computer is configured to function as: an input unit that acquires information on the moving body or a surrounding environment of the moving body; a prediction unit that generates first predicted motion data related to a future moving mode of the moving body based on the information acquired via the input unit; a communication control unit that performs processing related to communication with an additional mobile automation device mounted on an additional moving body and receives second predicted motion data related to a future moving mode of the additional moving body via the input unit from the additional mobile automation device; and a priority determination unit that determines a motion priority order of the moving body and the additional moving body based on the first predicted motion data and the second predicted motion data, wherein motions of more than one moving body are controlled based on a determination result of the priority determination unit.

Furthermore, in order to solve the above-mentioned problems, the present invention provides a safety assurance device that cooperates with the above-mentioned mobile automation device to assure safety of a motion of a user, the safety assurance device is configured to include: an input unit that acquires information on the user carrying the safety assurance device or a surrounding environment of the user; a prediction unit that generates the second predicted motion data related to a future moving mode of the user based on the information acquired via the input unit; a communication control unit that performs processing related to communication with the mobile automation device and receives the first predicted motion data related to the future moving mode of the moving body on which the mobile automation device is mounted via the input unit from the mobile automation device; a priority determination unit that determinates a motion priority order of the user and the moving body based on the first predicted motion data and the second predicted motion data; and an output unit that transmits the second predicted motion data or a determination result regarding the motion priority order, wherein the processing related to communication with the mobile automation device performed by the communication control unit includes transmitting the second predicted motion data or the determination result regarding the motion priority order by the output unit, and wherein the mobile automation device is enabled to control the motion of the moving body based on the determination result of the priority determination unit of the safety assurance device.

### Effects of the present Invention

The present invention provides a unique effect that autonomous motion of a moving body can be achieved more appropriately and smoothly.

### BRIEF DESCRIPTION OF THE DRAWINGS

FIG. 1 is a functional block diagram illustrating an embodiment of a mobile automation device according to the present invention.
FIG. 2 is a diagram summarily illustrating an example of a hardware configuration of the mobile automation device shown in FIG. 1.
FIG. 3 is a diagram illustrating, in the form of a flowchart, steps of motion automation processing for a moving body executed by the mobile automation device of FIG. 1.
FIG. 4 is a diagram illustrating a state in which safe and smooth autonomous driving is achieved by executing the processing steps shown in FIG. 3.
FIG. 5 is a diagram illustrating another state in which safe and smooth autonomous driving is achieved by executing the processing steps shown in FIG. 3.
FIG. 6 is a diagram illustrating yet another state in which safe and smooth autonomous driving is achieved by executing the processing steps shown in FIG. 3.
FIG. 7 is a functional block diagram illustrating an embodiment of a safety assurance device according to the present invention.
FIG. 8 is a diagram illustrating, in the form of a flowchart, steps for traffic management executed by mutual communication between the mobile automation device of FIG. 1 and the safety assurance device of FIG. 7.
FIG. 9 is a diagram illustrating an example of an adverse traffic situation that may occur at a forked road.
FIG. 10 is a diagram illustrating another example of an adverse traffic situation that may occur at a forked road.

### DETAILED DESCRIPTION

Next, embodiments of a mobile automation device for a moving body according to the present invention will be described in detail with reference to the attached drawings. Furthermore, in this application, the term "moving body" is used as a concept that broadly includes mobile machines having a power source and a mobile mechanism that is driven by the power from the power source, particularly land mobile machines such as four-wheeled cars, motorcycles, and autonomous mobile robots, air mobile machines such as airplanes and drones, and water or underwater mobile machines such as ships and submarines, regardless of manned or unmanned motion. In the description of the following embodiments, the moving body is described as a four-wheeled car that runs on land, but the present invention can be applied to mobile machines other than four-wheeled cars.

According to an embodiment of the mobile automation device 10 of the present invention, it is possible to autonomously determine driving modes such as the driving direction and driving speed of a car equipped with the device 10. This allows a car equipped with the mobile automation device 10 to travel toward a destination without human driving operations on the car or with assistance to human driving operations on the car.

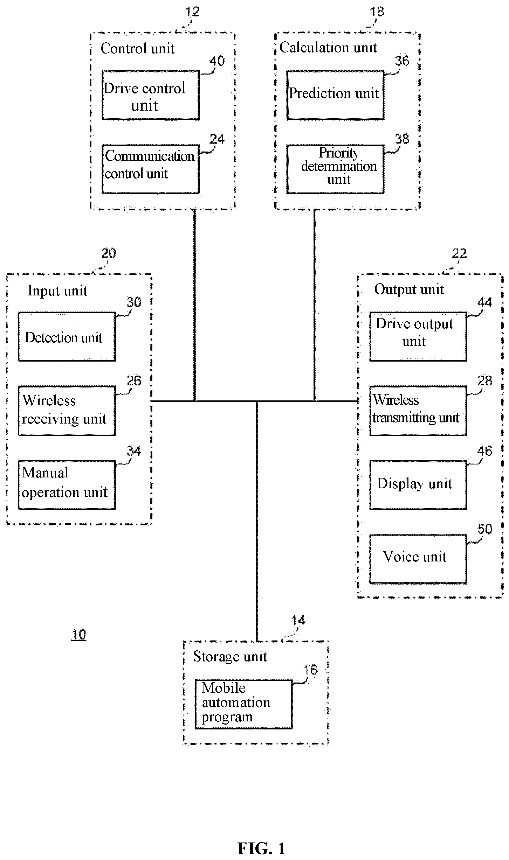

Referring to FIG. 1, the mobile automation device 10 of the car has a control unit 12 that controls the entire device 10 and the hardware parts of the car connected to the device 10; a storage unit 14 that stores in advance a mobile automation program 16 which specifies a processing sequence about determination of the driving mode as well as data necessary for executing the program 16; and a calculation unit 18 that executes calculation processing required for determination of the driving mode. The mobile automation device 10 further has various input units 20 that acquire information necessary for determination of the driving mode and input the acquired information into the device 10, and various output units 22 that supply calculation results and control signals acquired by processing based on the mobile automation program 16 to the hardware parts of the car equipped with the device 10 or to other cars.

The input units 20 are connected to various input hardware and can cooperate with the connected input hardware to acquire various information or data from the outside of the mobile automation device 10. The input unit 20 is also connected to the control unit 12 and transmits the acquired information or data to the storage unit 14 under the control of the control unit 12.

The output unit 22 is connected to the control unit 12 and also to various output hardware. The output unit 22 cooperates with the connected output hardware under the control of the control unit 12 to transmit various information-containing signals or command signals to the outside of the mobile automation device 10.

The control unit 12 has a communication control unit 24 that is responsible for control related to transmission and receiving of wireless information between the present car equipped with the mobile automation device 10 and another car equipped with an additional mobile automation device.

The mobile automation device 10 has a wireless receiving unit 26 capable of receiving wireless signals transmitted from wireless transmitting devices in a broad sense, conceptually including additional mobile automation devices with wireless communication functions mounted on other cars, Global Positioning System (GPS) transmitters, traffic control centers, and wireless transmitters installed on traffic management structures such as traffic signal machines and road signs. The wireless receiving unit 26 constitutes a part of the input unit 20 of the mobile automation device 10. The wireless receiving unit 26 is connected to the communication control unit 24 of the control unit 12, and executes receiving processing of wireless signals under the control of the communication control unit 24.

The mobile automation device 10 further has a wireless transmitting unit 28 that transmits wireless signals containing driving information of the present car, such as a destination, a scheduled time of arrival at the destination, and a scheduled driving route, to another car equipped with an additional mobile automation device. The wireless transmitting unit 28 constitutes a part of the output unit 22 of the mobile automation device 10. The wireless transmitting unit 28 is connected to the communication control unit 24 of the control unit 12, and executes transmitting processing of wireless signals under the control of the communication control unit 24.

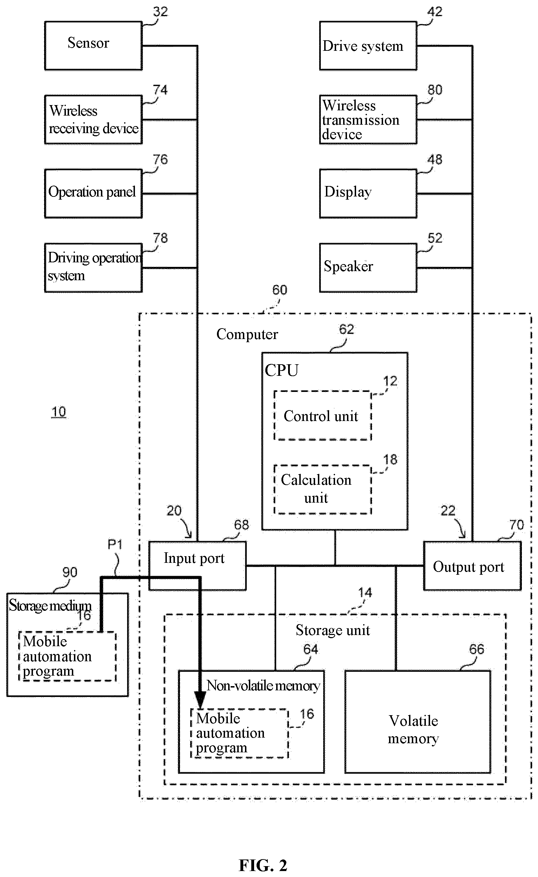

The mobile automation device 10 has a detection unit 30 that detects driving information of the present car and the surrounding environment of the present car. The detection unit 30 constitutes a part of the input unit 20 of the mobile automation device 10. The detection unit 30 is connected to input hardware capable of detecting information of the present car or the outside of the present car, such as a video camera, i.e., an image sensor, that acquires visual information around the present car, a speedometer that detects the driving speed of the car, and a direction sensor that detects the driving direction of the car. A typical example of such input hardware is a sensor 32 shown in FIG. 2, which will be described later. Information detected by the detection unit 30 via such input hardware is supplied to the mobile automation device 10 under the control of the control unit 12.

The mobile automation device 10 has a manual operation unit 34 that receives information through hardware input operations performed manually by the passenger of the car. The manual operation unit 34 constitutes a part of the input unit 20 of the mobile automation device 10. The manual operation unit 34 is connected to the control unit 12, and the input operation of information by the passenger or other user of the car or the processing of the inputted information is controlled by the control unit 12. The information that the manual operation unit 34 receives from the passenger contains information used to determine a scheduled driving route, such as a desired destination or transit points, and/or information that is the basis for driving assistance by the mobile automation device 10 when the passenger performs some of operations required for driving the car.

The calculation unit 18 has a prediction unit 36 that is directly or indirectly connected to the control unit 12, the storage unit 14, and the input unit 20, and predicts a future driving mode of the car equipped with the mobile automation device 10 based on information acquired via the input unit 20. The prediction process by the prediction unit 36 is executed according to the provisions of the mobile automation program 16 stored in the storage unit 14 under the control of the control unit 12.

Examples of information that can be used to predict future driving modes include location information acquired via the wireless receiving unit 26, driving information of the present car and information on the surrounding environment acquired via the detection unit 30, and information on transit locations or destinations acquired via the manual operation unit 34.

The future driving mode predicted by the prediction unit 36 includes various data items related to autonomous driving, such as a driving route to the destination, an expected driving position on a road, an expected passing time at any intermediate location, an expected arrival time to the destination, and an expected driving speed at any intermediate location. The control unit 12 cooperates with the prediction unit 36 to generate a data signal containing these items as predicted driving data (i.e., predicted motion data) according to the provisions of the mobile automation program 16. For example, based on the map information and destination information acquired by the device 10, the prediction unit 36 can calculate a predicted driving position that is several seconds or minutes later as at least a part of the predicted driving data. During the autonomous driving process, the mobile automation device 10 may take the predicted driving position that is several seconds or minutes later calculated by the prediction unit 36 as a short-term or medium-term destination for processing.

The predicted driving data generated by the prediction unit 36 of the mobile automation device 10 is supplied from the wireless transmitting unit 28 to an additional mobile automation device mounted on another car, thereby sharing the predicted driving mode of the car equipped with the mobile automation device 10 with other cars.

The calculation unit 18 further includes a priority determination unit 38 that determines the driving priority order (i.e., the motion priority order) of the present car and another car of which scheduled driving routes may intersect or approach each other at a certain time. The priority determination unit 38 can determine the driving priority order based on the predicted driving data generated by the mobile automation device 10 mounted on the present car and the predicted driving data generated by the mobile automation device mounted on one or more other cars and received via the wireless receiving unit 26. The determination process by the priority determination unit 38 is executed according to the provisions of the mobile automation program 16 stored in the storage unit 14 under the control of the control unit 12. The control unit 12 cooperates with the priority determination unit 38 to generate a data signal containing a determination result regarding the driving priority order as priority order data according to the provisions of the mobile automation program 16. The priority order data carried on the signal may include not only the determination result itself but also information or data used as a base for determining the priority order.

The determination result of the driving priority order calculated by the priority determination unit 38 of the mobile automation device 10 is supplied from the wireless transmitting unit 28 to an additional mobile automation device mounted on another car, and the priority order data calculated by the mobile automation device 10 is thereby shared with the device 10 mounted on other cars. Due to such sharing, the mobile automation device 10 can not only control the driving of the present car but also control the driving of other cars indirectly.

The priority order data shared among respective cars can be used for comparison by the control unit 12 and used to confirm the appropriateness of a determination result. If there is a difference between determination results, the mobile automation device 10 that discovered the difference may transmit a signal to the other mobile automation devices to prompt them to make new determination. At the same time, the mobile automation device 10 can update the predicted driving data as needed, transmit the updated data to the other cars, and redetermine the driving priority order using the updated data.

The control unit 12 has a drive control unit 40 that controls a drive system 42 of the car including a power source such as an engine or a motor, a transmission, drive wheels, etc. The drive control unit 40 realizes autonomous driving of the car equipped with the mobile automation device 10 or driving assistance for the driver of the car by controlling the drive system 42 via the output unit 22. When the drive control unit 40 receives a data signal containing the priority order data generated by the priority determination unit 38, it executes control to the drive system 42 reflecting the contents of the priority order data. The drive control unit 40 can generate a drive control signal to be used for controlling the drive system 42, for example by cooperating with the calculation unit 18.

The mobile automation device 10 has a drive output unit 44 that outputs the drive control signal generated by the drive control unit 40 to the drive system 42. The drive output unit 44 constitutes a part of the output unit 22 of the mobile automation device 10. It can be said that the drive output unit 44 plays a role of an interface between the mobile automation device 10 and the drive system 42 of the car.

With the above-mentioned configuration, a moving body equipped with the mobile automation device 10 can directly communicate with another moving body equipped with a mobile automation device in the vicinity. Information that the mobile automation device 10 can communicate with additional mobile automation devices may include, but is not limited to, predicted driving data and the determination result of the driving priority order, and so on. For example, if the mobile automation device 10 transmits and receives a wireless signal containing the moving result of the driving of the moving body controlled according to the determination result to one or more additional mobile automation devices that have provided the predicted driving data used to determine the driving priority order, it is more advantageous to realize smooth traffic. In particular, the mobile automation device 10 of the car determined to have a low priority can immediately recognize that the driving of the present car is permitted and can quickly proceed to a next driving action.

In particular, when a moving body is moving at high speed, when the degree of freedom of the route that the moving body can take is high, or when moving bodies in motion are already very close to each other at the time of recognizing each other's presence, it is required to make determination as quickly as possible and control the moving body in order to avoid a collision. Therefore, the ability of direct communication between moving bodies is an extremely effective advantage from the viewpoint of ensuring safety. However, communication between moving bodies does not always need to be direct, and communication may be performed using communication facilities, such as a traffic control center, or machines as appropriate depending on communication conditions such as the capacity of communication data, the wireless communication environment, the processing power of the mobile automation device 10, and the degree of urgency.

The mobile automation device 10 may further have a display unit 46 that is used to display various information acquired from the input unit 20 and/or future driving schedules calculated by the calculation unit 18 for the passengers of the car. The display unit 46 constitutes a part of the output unit 22 of the mobile automation device 10. It can be said that the display unit 46 plays the role of an interface between the mobile automation device 10 and output hardware such as a display 48 mounted on the car. As an example of a display mode of the display unit 46, it is possible to display on the display 48 an image of the outside of the car acquired by an on-board video camera or an image acquired by processing the acquired image. Instead of such image display, or by superimposing on the displayed image, the information acquired by the input unit 20 and/or the calculation result of the calculation unit 18 may be displayed as numerical values or symbols.

The mobile automation device 10 may further include a voice unit 50 that outputs audio, such as an artificial voice or a warning sound, corresponding to various information acquired from the input unit 20 and/or the calculation results calculated by the calculation unit 18 to notify the passengers of the car. The voice unit 50 constitutes a part of the output unit 22 of the mobile automation device 10. It can be said that the voice unit 50 plays a role of an interface between the mobile automation device 10 and output hardware such as a speaker 52 mounted on the car.

Next, an example of a hardware configuration capable of realizing the embodiment of the mobile automation device 10 according to the present invention described above will be described with reference to FIG. 1. As shown in FIG. 2, the embodiment of the mobile automation device 10 according to the present invention can be realized at least in its main part by a computer 60, which is generally called a microcomputer or a microcontroller. In other words, it can be understood that the computer 60 has the function of the mobile automation device 10 as one embodiment of the present invention, by executing the mobile automation program 16.

The computer 60 includes a central processing unit (CPU) 62 that controls actions of the components of the computer 60 and external devices connected to the computer 60, and a storage device that includes a non-volatile memory 64 that non-temporarily stores information acquired from the outside of the computer 60 and calculation results acquired by the CPU 62, and a volatile memory 66 that temporarily stores them. The computer 60 further includes an input port 68 that receives various information and data from the outside of the computer 60, and an output port 70 that transmits various signals, such as control signals acquired from calculation processing by the CPU 62 and information-containing signals, to the outside of the computer 60. In the computer 60, the non-volatile memory 64, the volatile memory 66, the input port 68, and the output port 70 are all connected to the CPU 62.

The CPU 62 of the computer 60 functions as the control unit 12 and the calculation unit 18 of the mobile automation device 10 shown in FIG. 1. In FIG. 2, in order to clearly show that the CPU 62 functionally includes the control unit 12 and the calculation unit 18 of the mobile automation device 10, the control unit 12 and the calculation unit 18 are shown in dashed line blocks within the block of the CPU 62.

The non-volatile memory 64 and the volatile memory 66 of the computer 60 function as the storage unit 14 of the mobile automation device 10. In order to clearly show that the non-volatile memory 64 and the volatile memory 66 are components of the storage unit 14, the functional block of the storage unit 14 is depicted in FIG. 2 as a dashed line block that contains blocks representing the non-volatile memory 64 and the volatile memory 66.

Besides, in this application, the non-volatile memory 64 means a storage device that can maintain stored contents even without external power supply, and is a concept that not only includes so-called Read Only Memory (ROM) but also broadly includes devices in which information temporarily stored can be rewritten. An example of a storage device that can be implemented as the non-volatile memory 64 in the computer 60 is a flash memory in which information temporarily stored can be rewritten using electricity. However, it is not limited to a flash memory, and other storage devices in which information can be rewritten may be used as the non-volatile memory 64.

On the other hand, the volatile memory 66 mentioned in this application means a storage device that can maintain stored contents only when it is powered on. Representative storage devices that constitute the volatile memory 66 include Random Access Memory (RAM), more specifically Dynamic RAM (DRAM) or Static RAM (SRAM).

By non-temporarily storing the mobile automation program 16 in the non-volatile memory 64, the CPU 62 can execute autonomous driving or driving assistance for the car equipped with the computer 60 according to the processing sequence defined in the mobile automation program 16. Furthermore, if the non-volatile memory 64 storing the mobile automation program 16 is a rewritable storage device such as a flash memory, the program can be easily updated as necessary.

The input port 68 and output port 70 of the computer 60 serve as the input unit 20 and output unit 22, respectively, of the mobile automation device 10. In FIG. 2, in order to clearly show that the input port 68 and output port 70 are components of the input unit 20 and the output unit 22, respectively, the functional blocks of the input unit 20 and the output unit 22 are depicted as dashed line blocks containing blocks representing the input port 68 and the output port 70, respectively.

Various input hardware is connected to the input port 68. For example, various sensors 32 such as a video camera (image sensor) that acquires image signals related to the surrounding environment, a speedometer, and a driving direction detector, a wireless receiving device 74 consisting of parts such as an antenna, an operation panel 76 that allows to input driving conditions required by the user such as a destination and intermediate points, and a driving operation system 78 such as a steering wheel and brakes are connected to the input port 68. The input hardware (32, 74, 76, 78) connected to the input port 68 may be broadly understood as constituting a part of the input unit 20 of the mobile automation device 10.

Various output hardware is connected to the output port 70. For example, a wireless transmission device 80 consisting of components such as an antenna, a drive system 42 that transmits the output from the power source to the drive wheels, a display 48 that displays an image related to the information acquired by the input unit 20 and/or the calculation result of the calculation unit 18, and a speaker 52 that emits a voice related to the information acquired from the input unit 20 or the calculation result of the calculation unit 18 are connected to the output port 70. The output hardware (42, 48, 52, 80) connected to the output port 70 may be broadly understood as constituting a part of the output unit 22 of the mobile automation device 10.

However, by storing a mobile automation program 16 readable by the computer 60 in a non-transitory storage medium 90, the computer 60 is capable of reading in the mobile automation program 16 and function as an embodiment of the mobile automation device 10 of the present invention.

Non-transitory storage media 90 that a computer can read (non-transitory computer-readable media) include, but are not limited to, RAM, ROM, ultraviolet EPROM (UV-EPROM), electrically erasable ROM (EEPROM), flash memory, field programmable gate arrays (FPGA), CD-ROM, digital versatile disk (DVD), universal serial bus (USB) memory, and other optical or magnetic storage.

The mobile automation program 16 can be newly written or updated in the computer 60 by connecting the storage medium 90 on which the program 16 is written to the input port 68 by wire or wirelessly, and storing the program 16 imported into the computer 60 via the input port 68 in the non-volatile memory 64 under the control of the control unit 12 (see the arrow P1 in FIG. 2).

The connection of the storage medium 90 to the input port 68 can be realized by connecting a read driver that is compatible with the type of the storage medium 90 and enables the computer 60 to appropriately read the program 16 stored in the storage medium 90 to the input port 68. Alternatively, if the non-transitory computer-readable medium 90 is provided in a wireless network, the program 16 may be configured to be loaded into the computer 60 via the wireless transmitting unit 28.

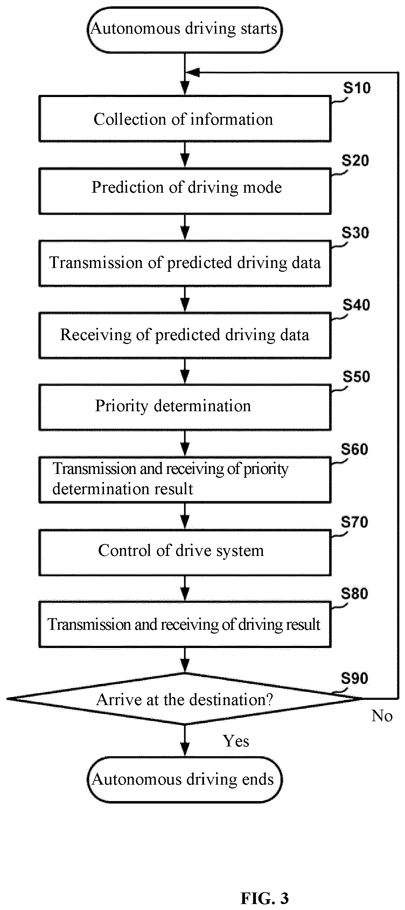

Next, referring to FIG. 3, an example of the processing steps of the mobile automation program 16 executed by an embodiment of the mobile automation device 10 of the present invention, from determining driving priority order (motion priority order) to autonomously driving a car (moving body) equipped with the mobile automation device 10 in accordance with this determination, will be described.

When the car equipped with the device 10 starts autonomous driving, the mobile automation device 10 collects information acquired by the input unit 20 that is necessary for the generation of predicted driving data performed by the prediction unit 36 (step S10).

For example, the detection unit 30, which works in cooperation with the sensor 32 to detect information on the driving condition and the external environment of the present car, allows the mobile automation device 10 to acquire image information acquired by a video camera and an image sensor, the current driving speed acquired by a speedometer, and the current driving direction acquired by a direction meter.

If the car in which the mobile automation device 10 is mounted utilizes the GPS, the mobile automation device 10 can also acquire map information of the current location and the surrounding region during traveling from the wireless receiving unit 26.

From the manual operation unit 34, the mobile automation device 10 can acquire various signals generated from operations by the driver, passengers, and other users of the car. For example, the mobile automation device 10 can acquire signals containing information on the destination and transit locations generated in response to the operation on the operation panel 76 by the user of the car, and signals containing the operation contents of the driving operation system 78 such as the steering wheel and brakes when the driver is responsible for part of the driving operation of the car himself/herself.

After performing control related to information acquisition processing along with the control of the input unit 20, the control unit 12 of the mobile automation device 10 performs control processing for storing the information acquired by the mobile automation device 10 in the volatile memory 66 or non-volatile memory 64 constituting the storage unit 14. In addition, as necessary, the control unit 12 can also erase or update the acquired information stored in the storage unit 14 temporarily. For example, the acquired information on an opposite car can be reset after two cars have safely passed each other and move away from each other.

The prediction unit 36 of the calculation unit 18 appropriately uses the information stored in the storage unit 14 to make predictions regarding the future driving mode of the car equipped with the mobile automation device 10 (step S20).

Items related to autonomous driving, such as the driving route to the destination, the expected driving position on the road, the expected passing time at any intermediate point, the expected arrival time to the destination, and the expected driving speed at any intermediate point, predicted by the prediction unit 36 are contained in a signal transmitted to the outside of the mobile automation device 10 as predicted driving data. The process related to the generation of a signal containing the predicted driving data is executed under the control of the control unit 12 in accordance with the provisions of the mobile automation program 16.

The mobile automation device 10 stores the predicted driving data of the present car generated in step S20 in the storage unit 14, and transmits a wireless signal containing the predicted driving data from the wireless transmitting unit 28 to an external device (step S30). The external transmission of the predicted driving data signal is performed particularly under the control of the communication control unit 24. The transmitting destination of the predicted driving data signal is, for example, another car equipped with an additional mobile automation device that is traveling within a predetermined distance range from the present car.

The mobile automation device 10 can receive a predicted driving data signal generated by a mobile automation device according to the present invention mounted on another car traveling around the present car under the control of the communication control unit 24 via the wireless receiving unit 26 (step S40). The information contained in the received predicted driving data signal is stored in the volatile memory 66 or non-volatile memory 64 constituting the storage unit 14 under the control of the control unit 12.

The priority determination unit 38 of the calculation unit 18 compares the predicted driving data of the present car generated in step S20 with the predicted driving data of the other cars contained in the wireless signal received in step S40, and makes priority determination as to which car should be given the driving priority when there is a possibility that the scheduled driving routes will intersect or approach each other (step S50). The control unit 12 cooperates with the priority determination unit 38 to generate a wireless data signal containing the determination results regarding the driving priority order and information related to the determination results as priority order data.

The communication control unit 24 of the mobile automation device 10 enables the wireless transmitting unit 28 to perform control actions to transmit a wireless data signal containing the priority order data generated in step S50 to an additional mobile automation device that is the source of the predicted driving data signal received in step S40. Furthermore, the communication control unit 24 of the mobile automation device 10 enables the wireless receiving unit 26 to perform control actions to receive a wireless data signal containing the priority order data generated by the additional mobile automation device that is the transmitting destination of the predicted driving data signal in step S30 from the additional mobile automation device. That is, the mobile automation devices that have exchanged predicted driving data now communicate with each other to exchange priority order data (step S60).

The mobile automation device 10 can check whether its own determination of driving priority order is appropriate by comparing the priority order data received from other cars with the priority order data generated by its own device 10. Through such a check, the safety of the autonomous driving may be further improved.

If a difference is found between the results of priority order calculated by respective mobile automation devices 10, the mobile automation device 10 can notify the another mobile automation device that calculated a result different from its own determination result that there is a difference between the mutual determination results and prompt the other mobile automation device to make redetermination. At the same time, the mobile automation device 10 may also make redetermination regarding the driving priority order in its own device 10. Furthermore, as necessary, the mobile automation device 10 may reacquire information on the driving state and external environment of the present car, update the predicted driving data using the reacquired information, retransmit the updated predicted driving data to the other mobile automation devices, and make redetermination using the updated predicted driving data.

The drive control unit 40 controls the drive system 42 via the drive output unit 44 to realize autonomous driving according to the priority order data generated by the priority determination unit 38 (step S70). The car under the control of the drive system 42 by the drive control unit 40 travels on the road while adjusting the driving direction, decelerating, stopping temporarily, and other actions as necessary to ensure the safe and smooth passage of respective cars according to the priority order determined by the priority determination unit 38 in comparison with other cars traveling nearby.

In addition, if a difference is found in the results of priority order calculated by respective mobile automation devices in the previous processing step S60, the drive control unit 40 preferably controls the car to perform actions such as slow driving or stopping temporarily, which will ensure the safety of the present car and its surroundings as quickly and as maximally as possible, so as to ensure the safety of the present car and its surroundings as quickly and as far as possible.

After performing the autonomous driving based on step S70, the mobile automation device 10 controls the wireless transmitting unit 28 through the communication control unit 24 to perform control actions to transmit to an additional mobile automation device the completion of the autonomous driving of the present car, which has been controlled according to the determined driving priority order. The mobile automation device 10 can further receive from the additional mobile automation device, via the wireless receiving unit 26, the completion of the autonomous driving according to the priority order determined in the additional car (step S80).

The processing of the mobile automation program 16 from step S10 to step S80 continues until the car equipped with the mobile automation device 10 arrives at the destination set in advance by the user by operating the operation panel 76. That is, the mobile automation device 10, particularly via the cooperation of the control unit 12 and the calculation unit 18, determines whether the car equipped with the device 10 has arrived at the destination (step S90). When the mobile automation device 10 determines that the car has not yet arrived at the destination (the option NO in step S90), it returns to step S10 and continues to execute the autonomous driving process according to the provisions of the mobile automation program 16. On the other hand, when the mobile automation device 10 determines that the car has arrived at the destination (the option YES in step S90), it ends the autonomous driving process that has been executed up to now according to the provisions of the mobile automation program 16.

Furthermore, if the determination result with the priority order received from the additional mobile automation device in the previous processing step S60 differs from the determination result made by the priority determination unit 38 of the device 10, the option that the mobile automation device 10 takes in step S90 will naturally be "NO". Therefore, the mobile automation device 10 can return to step S10 to recollect information (step S10), update the predicted driving data (step S20), retransmit the updated predicted driving data to the additional mobile automation device (step S30), receive again the predicted driving data updated by the additional mobile automation device (step S40), and make redetermination based on the updated predicted driving data acquired in steps S20 and S40 (step S50).

Next, an example of autonomous driving actions that are found for respective cars when the embodiment of the motion automation system 10 according to the present invention has executed the determination process of the driving priority order shown in the flowchart of FIG. 3 will be described. First, a case is assumed in which cars 206 and 208, both equipped with the mobile automation device 10 according to the present invention, are traveling near a T-shaped road consisting of a main road 202 with two lanes on two sides (one lane on each side) and a side road 204 with one lane of a full width.

As shown in FIG. 9, if the mobile automation devices mounted on respective cars are existing devices in the art, there is a possibility that the cars 206 and 208 stop while facing each other on the side road 204 and are temporarily unable to move, as described in the above-mentioned section of [Problems to be Solved by the present Invention]. However, if the cars 206 and 208 are equipped with the mobile automation devices 10 according to the embodiment of the present invention, such a case can be avoided.

First, an example of a case where the priority of driving on the side road 204 is given to the car 206 traveling on the main road 202 is described. As an example of a case where the priority of driving on the side road 204 is given to the car 206, the car 206 that is planned to turn left from the main road 202 to the side road 204 will reach the T-shaped junction 210 soon, while the car 208 traveling on the side road 204 toward the T-shaped junction 210 has not yet reached the avoidance location 212.

The mobile automation devices 10 of the cars 206 and 208 collect information on the driving modes of the present cars and the surrounding environment while driving on the main road 202 or the side road 204 (step S10). The mobile automation devices 10 of the cars 206 and 208 generate predicted driving data for the present cars based on the collected information respectively, and update the predicted driving data appropriately with the addition of collected information (step S20).

The mobile automation devices 10 of the cars 206 and 208 transmit wireless signals containing predicted driving data generated by their present cars to the opposite cars, and receive wireless signals containing predicted driving data generated by the mobile automation devices 10 of the opposite cars (steps S30 and S40). This allows each of the cars 206 and 208 to recognize the presence of the other car before detecting it with its own on-board video camera.

The mobile automation devices 10 of the cars 206 and 208 compare the predicted driving data of their present cars that they generated with the received predicted driving data of the other cars, and determine which of the cars 206 and 208 should be given the priority of driving on the side road 204 (step S50). In this example, the priority determination unit 38 of the mobile automation device 10 determines that the priority of driving on the side road 204 should be given to the car 206 that will reach the T-shaped junction 210 soon.

The mobile automation devices 10 of the cars 206 and 208 transmit the determination results regarding the priority driving to the other cars. At the same time, the mobile automation devices 10 of the cars 206 and 208 can receive the determination results regarding the priority of driving calculated by the mobile automation devices 10 of the other cars from the other cars (step S60). By receiving the determination results calculated by the other cars, the mobile automation devices 10 of the cars 206 and 208 can confirm that the cars 206 and 208 share the same determination results regarding the priority of driving.

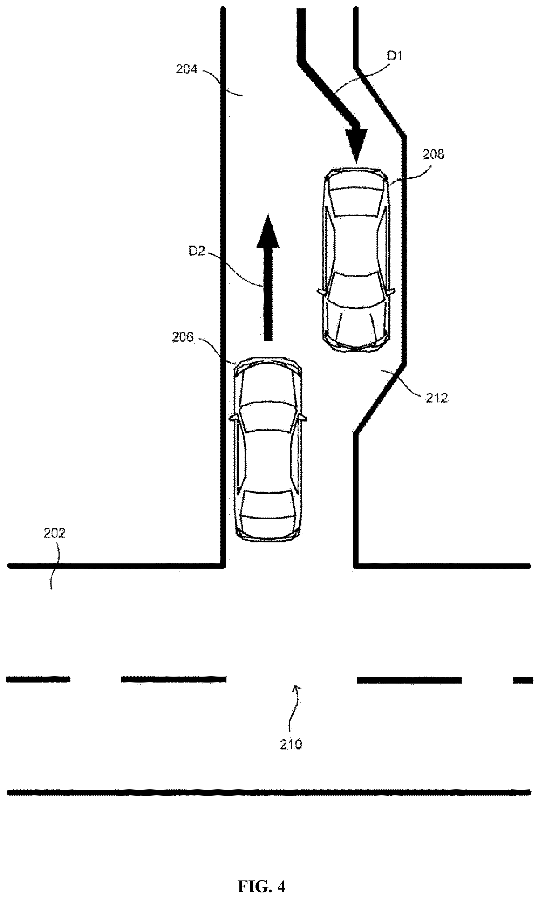

The mobile automation devices 10 of the cars 206 and 208 control the drive system 42 via the drive output unit 44 according to the calculated determination result regarding the priority of driving (step S70). In this example, since the car 206 has the priority of driving on the side road 204, the mobile automation device 10 of the car 208 steers the car 208 to the avoidance location 212 and stops the car 208 at the avoidance location 212 until the car 206 that turns left at the T-shaped junction 210 and travels on the side road 204 passes (see the arrow D1 in FIG. 4). After detecting that the car 206 has passed the avoidance location 212 arranged on the side road 204 (see the arrow D2 in FIG. 4), the mobile automation device 10 of the car 208 that stops at the avoidance location 212 restarts the car 208 and returns it to the side road 204 to resume traveling on the side road 204.

An example of a detection method by the mobile automation device 10 of the car 208 at this time is the process based on step S80 described above. More specifically, the mobile automation device 10 of the car 206 transmits a wireless signal containing information that the car 206 has completed autonomous driving according to the priority order of the present car at the timing of passing the avoidance location 212 to the mobile automation device 10 of the car 208. By receiving this wireless signal, the mobile automation device 10 of the car 208 can detect that the car 206 has passed the avoidance location 212 arranged on the side road 204.

On the other hand, an example of a case where the priority of driving on the side road 204 is given to the car 208 already traveling on the side road 204 is described. As an example of a case where the priority of driving on the side road 204 is given to the car 208, the car 208 traveling on the side road 204 has already passed the avoidance location 212 and will reach the T-shaped junction 210 soon, while a distance from a current position of the car 206, that is planning to turn left from the main road 202 to the side road 204, to the T-shaped junction 210 is relatively long, and it is expected that the car 206 will take a considerable amount of time to reach the T-shaped junction 210.

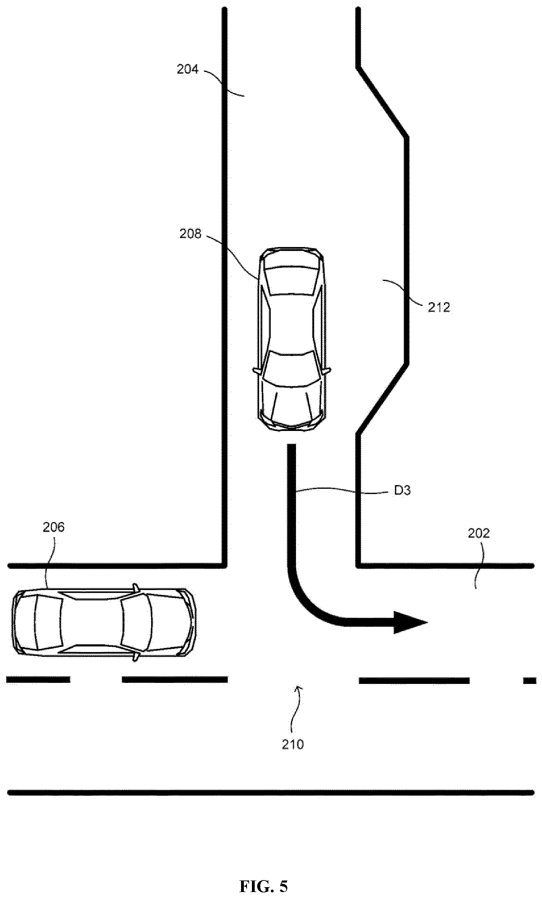

In this case, the priority determination unit 38 of the mobile automation device 10 mounted on the cars 206 and 208 determines that the car 208 should be given the priority of driving on the side road 204 (steps S10 to S50). The mobile automation devices 10 of the cars 206 and 208 control the drive system 42 via the drive output unit 44 according to the determination results calculated by each other (steps S60 to S70). In this example, since the car 208 has the priority of driving on the side road 204, the mobile automation device 10 of the car 206 stops the car 206 in front of the T-shaped junction 210 until the car 208 traveling on the side road 204 passes through the T-shaped junction 210 and enters the main road 202 (see FIG. 5). After detecting that the car 208 has passed through the T-shaped junction 210 and entered the main road 202 (see the arrow D3 in FIG. 5), the mobile automation device 10 of the car 206 that stops in front of the T-shaped junction 210 restarts the car 206 and performs autonomous driving control so that the car 206 turns left at the T-shaped junction 210 and enters the side road 204.

Furthermore, examples of autonomous driving actions that can be found for the cars 206 and 208 via mobile automation devices 10 when the cars 206 and 208 are traveling near the T-shaped road, where both the side road 204 and the main road 202 have only one lane of a full width and the side road 204 has no avoidance location 212, will also be briefly explained.

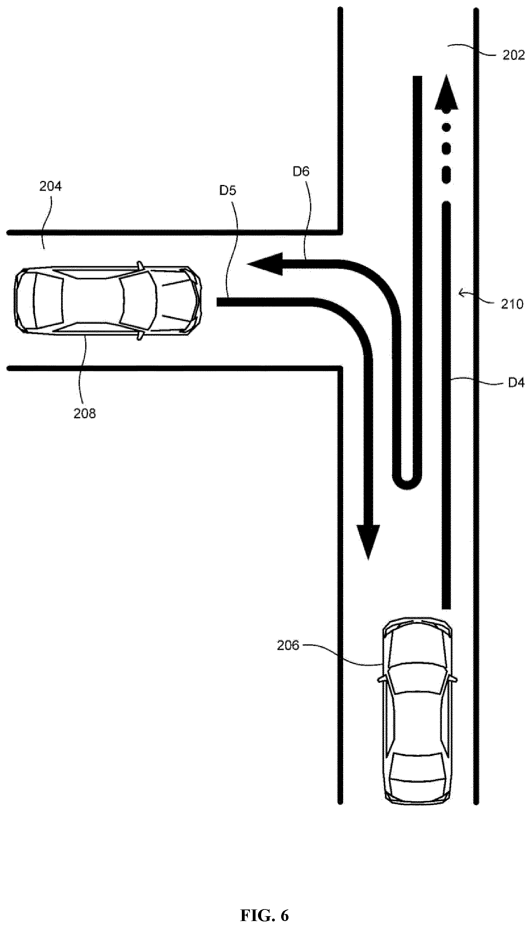

Near the T-shaped road shown in FIG. 6, the car 206 is autonomously traveling on the main road 202 from the bottom to the top of the figure, and plans to turn left to the side road 204 after reaching the T-shaped junction 210. On the other hand, the car 208 traveling on the side road 204 plans to turn right after passing the T-shaped junction 210. Here, as a result of the processing in steps S10 to S50, the car 208 has been given the priority of driving.

First, the mobile automation device 10 of the car 206 controls the drive system 42 to drive the car 206 until it passes through the T-shaped junction 210, and to stop the car 206 at a position slightly past the T-shaped junction 210 (the motion indicated by the arrow D4 in step S70). The mobile automation device 10 of the car 206 transmits a signal containing information on the driving result of the car 206 to the car 208. By receiving this signal, the mobile automation device 10 of the car 208 recognizes that there is no any impediment to the intended driving of the car 208 having the priority of driving (step S80).

After the car 208 turns right at the T-shaped junction 210 and enters the main road 202 (the motion indicated by the arrow D5 in step S70), the mobile automation device 10 of the car 208 transmits a signal containing information on the driving result to the car 206. By receiving this signal, the mobile automation device 10 of the car 206 recognizes that the car 208, which had a higher driving priority order compared to the present car, has left the T-shaped road and the driving right around the T-shaped junction 210 has been transferred to the car 206 (step S80). The car 206 temporarily retreats to just the front of the T-shaped junction 210, then moves forward again and turns left at the T-shaped junction 210. This action of the car 206 can be considered as the motion indicated by the arrow D6, which is the result of executing the processing step S70 of the mobile automation program 16 that has looped through step S90.

As yet another example, the example shown in FIG. 10 is described, which shows the assumed autonomous driving actions exhibited by the cars 224 and 226 both equipped with mobile automation devices 10 and traveling near a forked road where the straight road 220 and the branch road 222 intersect at an angle that forms a so-called Y-shaped road.

The mobile automation device 10 of the car 224 compares the predicted driving data of the present car that is generated by the device 10 with the received predicted driving data of the other car to determine whether the car 224 has the priority of driving, i.e., whether the car 224 can have the priority of driving with respect to the car 226 traveling on the opposite lane 220B at and around the Y-shaped junction 228 (steps S10 to S50).

At this time, even if the light-emitting display color of the traffic signal machine 232 cannot be detected by the sensor 32 (particularly the video camera) of the car 224, the mobile automation device 10 mounted on the car 224 can recognize the content of the indication currently being issued by the traffic signal machine 232 to the car 226 from the information contained in the predicted driving data received from the device 10 mounted on the opposite car 226. Therefore, in the case shown in FIG. 10, the mobile automation device 10 of the car 224 recognizes that the traffic signal machine 232 is issuing a stop indication signal to the car 226, and determines that the car 224 has the priority of driving in entering the branch road 222 with respect to the car 226.

The mobile automation device 10 of the car 224 controls the drive system 42 via the drive output unit 44 according to the calculated determination result regarding the priority of driving (steps S60 to S70). That is, the car 224 can cross the opposite lane 220B and enter the branch road 222 without having to temporarily stop in front of the Y-shaped junction 228, regardless of the presence of the car 226 that is decelerating and still traveling.

On the other hand, the car 226 traveling on the opposite lane 220B can recognize the light-emitting display color of the traffic signal machine 232, and the mobile automation device 10 mounted thereon can receive the predicted driving data and the determination result regarding the priority of driving from the car 224. Therefore, the device 10 mounted on the car 226 recognizes that the other car 224 has the priority of driving near the Y-shaped junction 228, and can control the driving of the car 226. At this time, the device 10 mounted on the car 226 preferably executes a process of displaying on the display 48 the traffic conditions near the Y-shaped junction 228 predicted in the near future, the presence or absence of the priority of driving and the driving schedules of respective cars 224 and 226 associated therewith, etc. This is because the display on the display 48 can give the passengers of the car 226 a sense of security in the autonomous driving currently being performed.

Meanwhile, a transmitter for transmitting a wireless signal carrying information required for the mobile automation device 10 to recognize the surrounding environment or determine the driving priority order may be attached to a structure such as a traffic signal machine or a traffic sign body. In the example shown in FIG. 10, the transmitter may be attached to the traffic signal machines 230 and 232, so that the driving permission or the stop indication transmitted by the traffic signal machines 230 and 232 in the form of displaying a light color can be recognized even by the car 226 or 224 traveling in the opposite lane opposite to these signal machines. In this way, the mobile automation device 10 can acquire information on the surrounding environment even when there is no other car that can provide predicted driving data near the present car.

In addition to such information, the transmitters attached to these structures may function as relay transmitters that collect traffic information and/or information on surrounding traffic conditions transmitted by traffic management facilities such as traffic control centers, and appropriately transmit wireless signals containing such information. In this case, the mobile automation device 10 mounted on a car traveling near a structure equipped with the transmitter can more quickly and efficiently acquire information necessary and sufficient for generating predicted driving data or determining the priority of driving.

A safety assurance device that has an essential configuration in common with the mobile automation device according to the present invention and is formed in a size and shape that is easy to carry may also be considered as one embodiment of the present invention. A safety assurance device 300, as one embodiment of the present invention, cooperates with the mobile automation device 10 to build a traffic management system that supports the safe and smooth motions of all road users, including pedestrians and cyclists. It can be said that such a safety assurance device 300 is included in many embodiments of the mobile automation device 10.

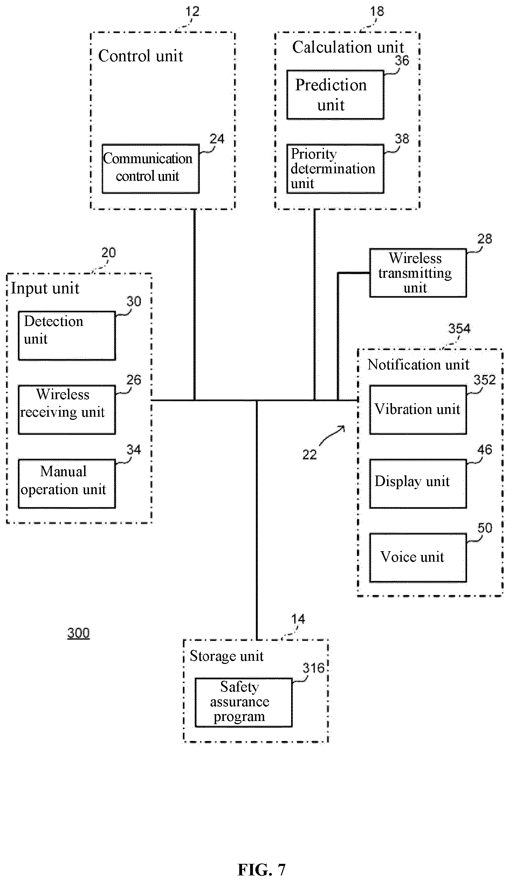

FIG. 7 shows an embodiment of the safety assurance device 300 that cooperates with the mobile automation device 10 to form a part of a traffic management system. Among the components of the safety assurance device 300, components that substantially have the same functions as those of the mobile automation device 10 are given the same reference numerals. In other words, most of the components included in the safety assurance device 300 are common to the components of the mobile automation device 10.

The configuration of the safety assurance device 300 is essentially the same as that of the mobile automation device 10, except that it is not necessary to provide components equivalent to the drive control unit 40 and the drive output unit 44 that operate in association with a drive unit provided in a mobile device such as a car. However, the portable safety assurance device 300 may have a configuration that allows it to be connected with a circuit of a moving body such as a two-wheeled vehicle or an electric wheelchair, and in this case, the safety assurance device 300 connected to the moving body functions as a mobile automation device. When such a configuration is adopted, the safety assurance device 300 may have a configuration that includes the drive control unit 40 and the drive output unit 44.

The safety assurance device 300, which does not include the drive control unit 40 and the drive output unit 44, ensures the safe motion of the user, i.e., the carrier, of the safety assurance device 300, by actions of the output unit 22 for drawing the attention of the carrier. As an embodiment of the safety assurance device 300, a smartphone having a safety assurance program 316 stored in a built-in storage device is taken as an example, and the safety assurance device 300 in the form of a smartphone includes a display unit 46, a voice unit 50, and a vibration unit 352 that vibrates the smartphone in the output unit 22. The vibration unit 352 can notify the carrier of information on the surrounding environment, such as the presence of an approaching vehicle, by vibration. In FIG. 7, the notification unit 354 which is a part of the output unit 22 represents a notification device or means for notifying information on the surrounding environment to the carrier of the safety assurance device 300 including the display unit 46, the voice unit 50, and the vibration unit 352.

The motion situation of the carrier of the safety assurance device 300 whose attention was drawn by the notification unit 354 is detected by the detection unit 30. The detection result is then transmitted to the mobile automation device 10 via the wireless transmitting unit 28, and information on the motion of the carrier of the safety assurance device 300 is also shared with a device of the communication destination. It is preferable that the notification for drawing attention performed by the output unit 22 continues until the detection unit 30 detects that the carrier has taken action to avoid danger.

The safety assurance program 316 stored in the storage unit 14 of the safety assurance device 300 has essentially the same contents as the mobile automation program 16 in terms of the program contents for operating the safety assurance device 300, such as communication with additional mobile automation devices 10, priority determination using received information, and transmission of the determination results.

If the safety assurance device according to the present invention is portable, when a person carrying the safety assurance device is walking or riding on a moving body not equipped with a mobile automation device, such as a bicycle, the mobile automation device 10 mounted on a mobile device such as a car can quickly detect the presence of the bicycle or the walking person before acquiring image information. On the other hand, for a person carrying the safety assurance device 300 and moving on a road, the presence of the person can be notified to a traveling car earlier. In other words, for a person carrying the safety assurance device 300, the safety of his/her motion is ensured by the safety assurance device 300.

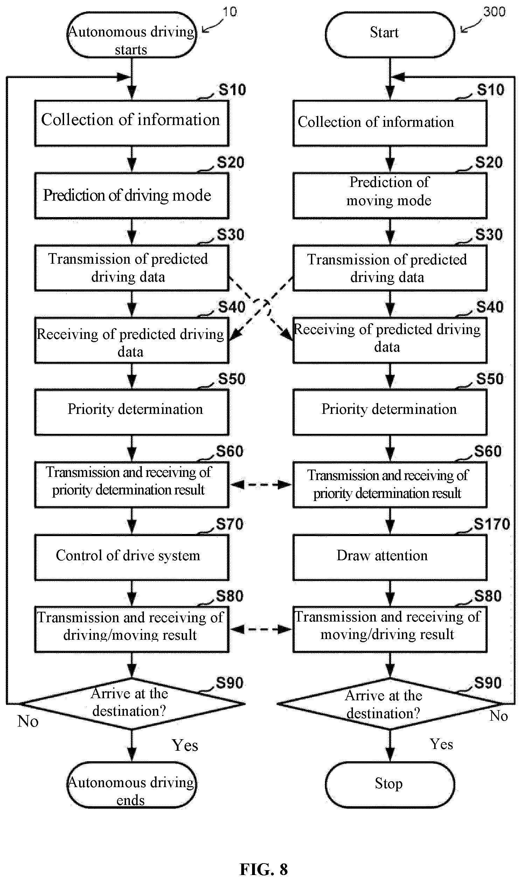

With reference to FIG. 8, an example of the processing of the mobile automation program 16 and the safety assurance program 316 associated with mutual communication between the mobile automation device 10 and the safety assurance device 300 according to the present invention accompanied with the execution of each embodiment of these devices will be described. In the following, a case is described in which it is assumed that the mobile automation device 10 is mounted on a traveling car, and the safety assurance device 300 is carried by a pedestrian, i.e., a user in motion.

The execution operations of the safety assurance device 300 storing the safety assurance program 316 are essentially common to the execution operations of the mobile automation device 10 storing the mobile automation program 16. Therefore, in FIG. 8, the execution operations of the safety assurance device 300 that are substantially common to the execution operations of the mobile automation device 10 are indicated with the same reference numerals as steps S10 to S60 and S80 to S90.

In FIG. 8, the running directions shown by the dashed line arrows indicate the transmission and receiving of data collected by the mobile automation device 10 and the safety assurance device 300 and the results of calculation to and from the additional devices. The safety assurance device 300 cooperates with the mobile automation device 10 to collect information on the moving state of the carrier or the environment around the carrier (step S10), predict the motion mode of the carrier based on the collected information (step S20), transmit and receive the predicted data created by the mobile automation devices 10 to and from respective devices (steps S30 to S40), and make priority determination based on the acquired predicted data and transmit and receive the determination results (steps S50 to S60).

In the case of the embodiment of the safety assurance device 300 shown in FIG. 7, unlike the mobile automation device 10 shown in FIG. 1, the safety assurance device 300 does not have the drive control unit 40 and the drive output unit 44, and therefore does not perform an action equivalent to the direct control by the drive system in step S70 in the mobile automation device 10. However, the safety assurance device 300 can indirectly control the action of the moving person by drawing the attention of the carrier thereof through a signal output from the notification unit 354 (step S170). Furthermore, when the mobile automation device 10 includes the configuration of the safety assurance device 300 as in the illustrated embodiment, such an action of drawing attention can also be executed in the mobile automation device 10.

The safety assurance device 300 detects the motion situation of the carrier after drawing his/her attention and transmits the detection result to the mobile automation device 10. The safety assurance device 300 then receives from the mobile automation device 10 the driving result of the moving body, that is, a notification that the autonomous driving of the moving body has been completed according to the determined driving priority order (step S80). The safety assurance device 300 continues the actions of steps S10 to S80 until the destination is reached (step S90).

Although the embodiments of the present invention have been described above, the specific methods of implementing the present invention are not limited to the above-mentioned embodiments. As long as the present invention can be implemented, appropriate changes in design and action sequence can be made. For example, auxiliary elements such as devices, circuits, and software that are used to assist the components used in the present invention in fulfilling their functions can be added or omitted as appropriate.

### Description of reference numerals

10-Mobile automation device
12-Control unit
14-Storage unit
16-Mobile automation program
18-Calculation unit
20-Input unit
22-Output unit
24-Communication control unit
26-Wireless receiving unit
28-Wireless transmitting unit
30-Detection unit
34-Manual operation unit
36-Prediction unit
38-Priority determination unit
40-Drive control unit
44-Drive output unit
46-Display unit
50-Voice unit
60-Computer
62-CPU
64-Non-volatile memory
66-Volatile memory
68-Input port
70-Output port
90-Storage medium
300-Safety assurance device
316-Safety assurance program
352-Vibration unit
354-Notification unit

## Claims

1. A mobile automation device for a moving body that controls the moving body so that the moving body moves autonomously, the device comprising:
an input unit configured to acquire information on the moving body or a surrounding environment of the moving body;
a prediction unit configured to generate first predicted motion data related to a future moving mode of the moving body based on the information acquired via the input unit;
a communication control unit configured to perform processing related to communication with an additional mobile automation device mounted on an additional moving body other than the moving body and receive second predicted motion data related to a future moving mode of the additional moving body via the input unit from the additional mobile automation device; and
a priority determination unit configured to determine a motion priority order of the moving body and the additional moving body based on the first predicted motion data and the second predicted motion data,
wherein a motion of the moving body or the additional moving body is controlled based on a determination result of the priority determination unit.

2. The mobile automation device according to claim 1, further comprising:
a drive control unit configured to control a drive system of the moving body based on the determination result of the priority determination unit.

3. The mobile automation device according to claim 1, further comprising:
an output unit configured to transmit the first predicted motion data or the determination result regarding the motion priority order,
wherein the processing related to communication with the additional mobile automation device performed by the communication control unit comprises transmitting the first predicted motion data or the determination result regarding the motion priority order by the output unit.

4. The mobile automation device according to claim 3, wherein
the output unit is further capable of transmitting a motion result of the motion of the moving body controlled based on the determination result regarding the motion priority order, and
the processing related to communication with the additional mobile automation device performed by the communication control unit further comprises transmitting and receiving the motion result.

5. The mobile automation device according to claim 1, wherein the input unit comprises:
a detection unit configured to acquire information on the motion of the moving body or the surrounding environment of the moving body;
a wireless receiving unit configured to acquire the information on the surrounding environment of the moving body by receiving a wireless signal containing the information on the surrounding environment of the moving body generated by a wireless communication device outside the moving body; and
a manual operation unit configured to acquire information on a motion schedule of the moving body based on an operation input by a user,
wherein the first predicted motion data is data generated by the prediction unit based on the information acquired via the detection unit, the wireless receiving unit, and the manual operation unit.

6. The mobile automation device according to claim 1, further comprising:
a display unit for displaying the information acquired by the input unit, the first or second predicted motion data, or the determination result regarding the motion priority order acquired by the priority determination unit.

7. A storage medium having a mobile automation program for a moving body stored therein, the mobile automation program enabling a computer to function as a mobile automation device for the moving body that controls the moving body so that the moving body moves autonomously,
wherein the mobile automation program stored in the storage medium enables the computer to function as:
an input unit configured to acquire information on the moving body or a surrounding environment of the moving body;
a prediction unit configured to generate first predicted motion data related to a future moving mode of the moving body based on the information acquired via the input unit;
a communication control unit configured to perform processing related to communication with an additional mobile automation device mounted on an additional moving body other than the moving body and receive second predicted motion data related to a future moving mode of the additional moving body via the input unit from the additional mobile automation device; and
a priority determination unit configured to determinate a motion priority order of the moving body and the additional moving body based on the first predicted motion data and the second predicted motion data,
wherein a motion of the moving body or the additional moving body is controlled based on a determination result of the priority determination unit.

8. The storage medium according to claim 7, wherein
the program further enables the computer to function as a drive control unit configured to control a drive system of the moving body based on the determination result of the priority determination unit.

9. The storage medium according to claim 7, wherein
the program further enables the computer to function as an output unit configured to transmit the first predicted motion data or the determination result regarding the motion priority order, and
the processing related to communication with the additional mobile automation device performed by the computer as the communication control unit comprises transmitting the first predicted motion data or the determination result regarding the motion priority order by the output unit.

10. The storage medium according to claim 9, wherein the function as the output unit comprises transmitting a motion result of the motion of the moving body controlled based on the determination result regarding the motion priority order, and
the processing related to communication with the additional mobile automation device performed by the communication control unit comprises transmitting and receiving the motion result.

11. The storage medium according to claim 7, wherein the function as the input unit that the program enables the computer to realize comprises functions as:
a detection unit configured to acquire information on the motion of the moving body or the surrounding environment of the moving body;
a wireless receiving unit configured to acquire the information on the surrounding environment of the moving body by receiving a wireless signal containing the information on the surrounding environment of the moving body generated by a wireless communication device outside the moving body; and
a manual operation unit configured to acquire information on a motion schedule of the moving body based on an operation input by a user,
wherein the first predicted motion data is data generated by the prediction unit based on the information acquired via the detection unit, the wireless receiving unit, and the manual operation unit.

12. The storage medium according to claim 7, wherein
the program further enables the computer to function as a display unit for displaying the information acquired by the input unit, the first or second predicted motion data, or the determination result regarding the motion priority order acquired by the priority determination unit.

13. A safety assurance device, which cooperates with the mobile automation device according to claim 1 to assure safety of a motion of a user, the safety assurance device comprising:
an input unit configured to acquire information on the user carrying the safety assurance device or a surrounding environment of the user;
a prediction unit that generates second predicted motion data related to a future motion mode of the user based on the information acquired via the input unit;
a communication control unit configured to perform processing related to communication with the mobile automation device and receive first predicted motion data related to a future motion mode of a moving body on which the mobile automation device is mounted via the input unit from the mobile automation device;
a priority determination unit configured to determine a motion priority order of the user and the moving body based on the first predicted motion data and the second predicted motion data; and
an output unit configured to transmit the second predicted motion data or a determination result regarding the motion priority order,
wherein the processing related to communication with the mobile automation device performed by the communication control unit comprises transmitting the second predicted motion data or the determination result regarding the motion priority order by the output unit, and
wherein the mobile automation device is made to control the motion of the moving body based on the determination result of the priority determination unit of the safety assurance device.

14. The safety assurance device according to claim 13, further comprising:
a notification unit for notifying the user of the information acquired by the input unit, the first or second predicted motion data, or the determination result regarding the motion priority order acquired by the priority determination unit.

15. The safety assurance device according to claim 14, wherein the input unit comprises:
a detection unit configured to acquire information on the motion of the user carrying the safety assurance device or the surrounding environment of the user;
a wireless receiving unit configured to acquire the information on the surrounding environment of the user by receiving a wireless signal containing the information on the surrounding environment of the user generated by a wireless communication device outside the safety assurance device; and
a manual operation unit configured to acquire information on a motion schedule of the user based on an operation input by the user,
wherein the second predicted motion data is data generated by the prediction unit based on the information acquired via the detection unit, the wireless receiving unit, and the manual operation unit.

16. The safety assurance device according to claim 15, wherein
the detection unit is further capable of detecting a motion state of the user after the notification unit has notified the user of the determination result regarding the motion priority order,
the output unit is further capable of transmitting the motion state of the user detected by the detection unit, and
the processing related to communication with the mobile automation device performed by the communication control unit further comprises receiving a motion result of the moving body and transmitting the motion state of the user.
